Europäisches Patentamt

European Patent Office

Office européen des brevets

(19)

(11) **EP 1 271 357 A2**

(12) **EUROPEAN PATENT APPLICATION**

(43) Date of publication:
**02.01.2003 Bulletin 2003/01**

(51) Int Cl.7: **G06F 17/30**

(21) Application number: **02250562.2**

(22) Date of filing: **28.01.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **28.06.2001 JP 2001195859**

(71) Applicant: **Hitachi, Ltd.**
**Chiyoda-ku, Tokyo 101-8010 (JP)**

(72) Inventors:
• **Inaba, Y., c/o Hitachi, Ltd, Intel. Property Group**
**Chiyoda-ku, Tokyo 100-8220 (JP)**

• **Tada, K., c/o Hitachi, Ltd, Intellectual Prop. Gp**
**Chiyoda-ku, Tokyo 100-8220 (JP)**
• **Sato, Y., c/o Hitachi, Ltd, Intellectual Prop. Gp**
**Chiyoda-ku, Tokyo 100-8220 (JP)**
• **Matsubayashi, T., c/o Hitachi Ltd, Intel. Prop. Gp**
**Chiyoda-ku, Tokyo 100-8220 (JP)**
• **Uchikado, M., c/o Hitachi Ltd, Intel. Prop. Group**
**Chiyoda-ku, Tokyo 100-8220 (JP)**

(74) Representative: **Calderbank, Thomas Roger et al**
**MEWBURN ELLIS**
**York House**
**23 Kingsway**
**London WC2B 6HP (GB)**

(54) **Profile management method for information filtering and profile management program**

(57)    In the information filtering for presenting document information through the filtering using profiles as the search condition data, it is requested to urge a user to take a proper measure to obtain the result of distribution without any noise and omission at the time of information filtering by detecting existence of a plurality of similar profiles and old profiles and then notifying this fact to a user.

For this purpose, the validity of profiles used for information filtering is notified to a user based on the similarity among a plurality of profiles and the number of hits for document information of profiles in order to urge this user to delete unwanted profiles. Moreover, unwanted profiles are eliminated by integrating and specializing a plurality of profiles.

FIG. 1

EP 1 271 357 A2

**Description**

The present invention relates to a profile management method for information filtering and more specifically to a profile management method for obtaining the desired result of users without any duplication and omission on the occasion of filtering document information using a profile as the search condition.

A large amount electronic documents (hereinafter, referred to as texts) are distributed to users from time to time in the form of electronic mail (E-mail) and electronic news or the like in recent years. Moreover, an information source for originating information pieces by utilizing WWW (World Wide Web) is also increasing rapidly and the amount of texts collected from these information sources using information collecting robots or the like is also increasing intensively. Therefore, recently, there is intensive rise of needs for information filtering system to search the texts including the information pieces which users want and to distribute such information pieces obtained to users.

Such information filtering system is disclosed, for example, in the official gazette of the Japanese Unexamined Patent Publication No. HEI 10-27182 (hereinafter, referred to as the cited reference 1). This cited reference 1 refers to the technique for distributing only the document information conforming to the query expression formed of words preset by a user to the relevant user.

However, in the cases where rare words which are not used so often are designated as the search condition or ordinary words are used to designate the search condition through complicated combination thereof, there rises a problem that leakage of search is generated.

Moreover, on the contrary, in the case where only ordinary words are used to designate a simplified query expression, there rises a problem that the search result includes many documents not conforming the object of search (hereinafter referred to as "search noise").

The applicant of the present invention have proposed the Japanese Patent Application No. HEI 1-75005 (hereinafter referred to as the cited reference 2) as a filtering technique to improve this problem explained above. In this cited reference 2, the user inputs, in place of the words, a sample document (hereinafter referred to as a "seed document") indicating the information who wants distribution thereof as the search condition. Here, the conformity of contents between such seed document and document information for distribution is calculated with the predetermined method and only the document information pieces having conformity exceeding the predetermined value are distributed to the relevant user.

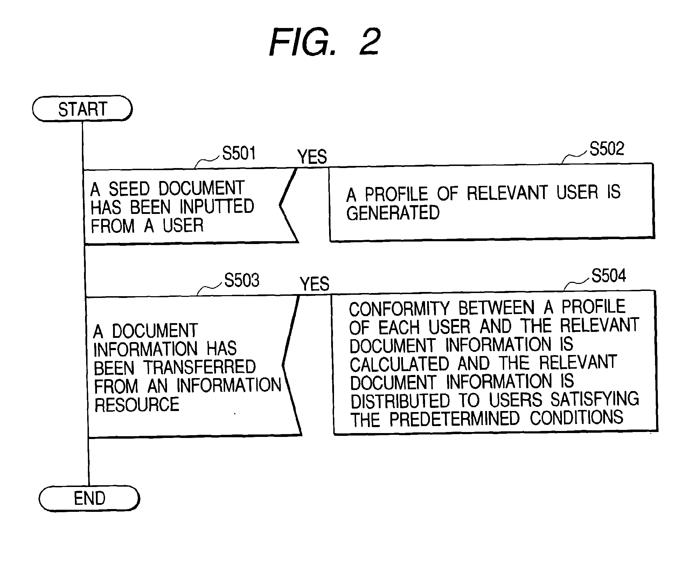

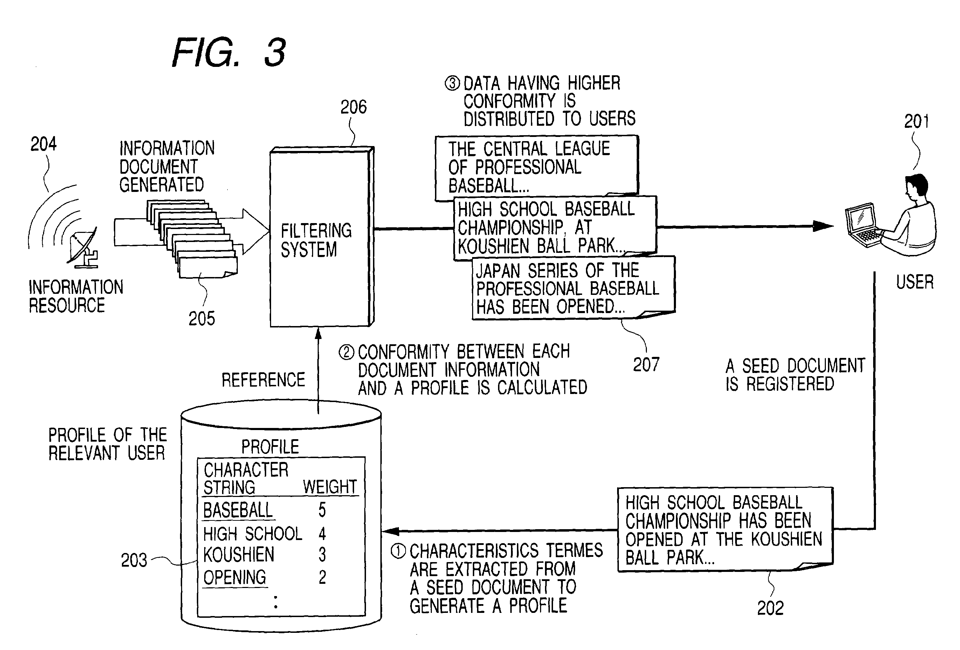

Here, the process of ordinary filtering system represented with the cited reference 2 will be explained with reference to Fig. 2 and Fig. 3.

Fig. 2 shows a PAD (Problem Analysis Diagram) indicating the processes of the filtering system utilizing an ordinary profile.

Fig. 3 is a schematic diagram showing the practical flows of processes of the filtering system utilizing an ordinary profile.

As shown in Fig. 2, in the ordinary filtering system represented by the cited reference 2, when a seed document is inputted from the user (S501), a search condition data (hereinafter referred to as "profile") of the relevant user is generated (S502). Next, when document information is transmitted from an information resource (S503), the conformity between the profile of each user and the relevant document information is calculated and the relevant document information is distributed to the user satisfying the predetermined condition (S504).

This process will be explained as follows based on the practical example with reference to Fig. 3.

First, a user 201 registers a sample document 202 (hereafter after referred to as a "seed document") indicating the information to be distributed. In the example of Fig. 3, the user 201 desires distribution of the information in regard to High school baseball championship when it is generated and therefore this user sets the seed document 202 "High school baseball championship has been opened at the Koushien ball-park.....".

The system retrieves a keyword (hereinafter referred to as "characteristic string") which indicates, as the characteristic, the contents of such document from the seed document 202, counts up the number of times of appearing of such keywords in the seed document and registers the counted data as a pair to a profile 203 as the weight of each characteristic string (① in Fig. 3). In the example of Fig. 3, the characteristic strings such as "High School", "Baseball", "Koushien" and "Opened" are retrieved from the seed document 202 and the number of times of appearing of such characteristic strings are registered to the profile 203 as the weights.

Thereafter, when the document information pieces 205 are sequentially transferred from the information resource 204, the conformity indicating in what degree such document information pieces are matched with the contents of the profile 203 is calculated (② in Fig. 3). Here, as a calculation equation for obtaining the conformity between a certain profile and a document information, the following (Equation 1), for example, is used.

(Equation 1)

$$S(D) = \sum_{i}^{N} \left\{ Frq(i) \times w(i) \right\} \qquad \text{--- (Equation 1)}$$

In this equation, S(D) is conformity between document information D and profile, Frq (i) is the number of times of appearing of characteristic string i in the document information D and w(i) is a weight of the characteristic string i within the relevant profile. Σ indicates a sum of all characteristic strings in the relevant profile. Depending on this expression, it becomes clear that higher conformity can be calculated for the document information in which the characteristic strings given the higher weight are appearing more frequently in the profile 203.

Only the document information 207 of which conformity exceeds the previously designated value is distributed to the user (③ in Fig. 3). In the example shown in Fig. 3, a higher conformity is calculated for the pieces of document information 207 such as "hot baseball games are exciting at the Koushien ball-park ......", "Japan series of professional baseball has been opened ......" and "High school baseball championship has been opened at the Koushien ball-park......" including the characteristic strings in the profile 203 and thereby such document information pieces are distributed to the user 201.

Thereby, it is now possible for the user to receive, depending on the cited reference 2, only the information including the contents similar to that of the seed document as the filtering result from a large amount of document information pieces only by indicating the seed document including the desired information.

As explained previously, the cited reference 2 relates to a technique of information filtering for previously generating a profile based on the seed document with which the user is capable of searching the object document from a large amount of documents.

However, the information filtering system like the cited reference 2 has the following problems.

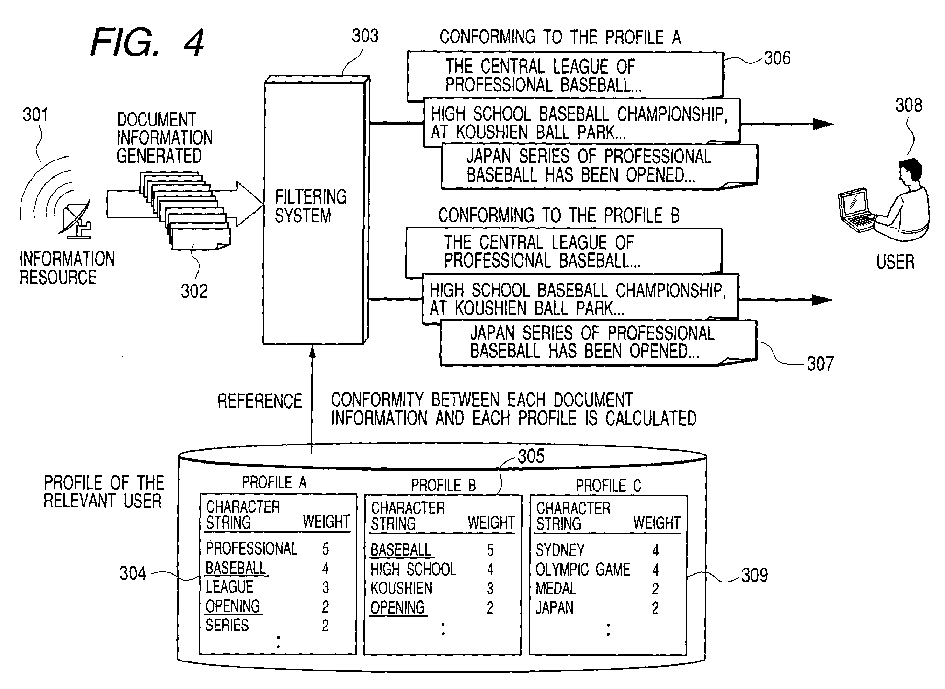

These problems will then be explained with reference to Fig. 4, depending on a practical example.

Fig. 4 is a conceptual diagram showing flows of practical processes in the case where the user has a plurality of profiles in the filtering system using ordinary profiles.

In general, the user often has the interest in various objects and therefore it is desirable for the user that various topics of a plurality of objects can be distributed. Therefore, it is general to introduce the system that the user is capable of setting a plurality of profiles and the information filtering system distributes, to the relevant user, only the document information pieces conforming to respective profiles.

In this case, when the user has set a plurality of profiles having similar contents, the same document information pieces are transmitted in some cases in duplication under the assumption that such document information pieces are matched with the respective profiles.

For example, as shown in Fig. 4, it is assumed that the user 308 wants the document information about professional baseball and the document information about high school baseball and therefore sets respectively the profile A304 and profile B305.

In such a case, the professional baseball and high school baseball are different objects, but these are common topics in the field of baseball and therefore the profile A304 and the profile B305 are similar in the contents. In the example of the figure, the characteristic strings "baseball" and "opened" are registered to both profiles A and B. Accordingly, the document information including these characteristic strings has higher conformity with both profiles A and B.

As a result, the duplicated document information pieces are included in the document information 306 conforming to the profile A and in the document information 307 conforming to the profile B. In the example of Fig. 4, since the document information pieces "High school baseball championship has opened at the Koushien ball-park..." and "Japan series of professional baseball has opened at......"include the character strings of "baseball" and "opened", the conformity between the profiles A and B is high and therefore these document information pieces are distributed in duplication.

As explained above, in the cited reference 2, when a plurality of profiles are set, duplicated document information pieces are transmitted in some cases. Therefore, distribution result becomes noisy for the user and considerable time is required until the target information can be found. Moreover, in the case where there is a limitation on the number of documents to be distributed, the other document information pieces desired are no longer distributed because of duplicated distribution explained above. Therefore, it is probable that omission is generated in the distribution.

Moreover, it can also be thought, as an additional problem, that the profiles of old topics or the topics which have lost the interest of people are set and left as they are.

For example, as shown in Fig. 4, it is assumed that the user 308 desires distribution of topic of Olympic games at Sydney and therefore sets the profile C309. However, for example, it is also assumed that time has passed, the topic of the Olympic games at Sydney has becomes the topic in the past and any topic about this Olympic games is no longer generated. In this case, any means is not provided for the user to detect by himself/herself that the user is still setting an old and useless profile. Particularly, in the case where the user can set many profiles, it is very difficult for the user to detect each time whether the user is still setting useless profiles or not. In the case where the number of profiles which may be set by the user is limited and in such a service system in which charging is executed based on the number of profiles being set, it is a serious problem for the user that there is no means to detect existence of such useless profiles.

In addition, when such profiles are set, a degree of conformity between useless profile and each document information piece must be calculated and there rises a problem, as a result, that the total performance of system will be deteriorated.

The present invention has been proposed to address the problems explained above and it is therefore preferable that the present invention provides a profile management method which can obtain excellent distribution result without any noise and omission for information filtering by detecting existence of a plurality of similar profiles and existence of old profiles and then informing it to the user in the information filtering for presenting the document information through the filtering using the profile as the search condition data.

Moreover, it is desirable for the present invention to provide a profile management method which can prevent holding of useless profiles by adequately and easily optimizing and deleting the useless profiles such as old profiles, permit the user to effectively set the profiles and moreover does not result in deterioration of performance as the system without referring to useless profiles.

In view of achieving the objects explained above, the invention in relation to the profile management method used for the information filtering of the present invention is structured to calculate validity for the information filtering to the profile and to notify the validity of profile to the user depending on the calculation result of validity in the profile management method to be used for the information filtering for presenting the document information through the filtering by calculating the conformity with the profile as the search condition data.

In more detail, in the profile management method used for information filtering explained above, validity of the information filtering may be defined as similarity among profiles in the case where a plurality of profiles are designated.

In further detail, in the profile management method used for information filtering, two or more profiles designed with the user are integrated into a profile among a plurality of profiles explained above.

In view of achieving the objects explained above, the invention in relation to the profile management method used for the information filtering of the present invention may also be structured additionally to instruct the user to designate two or more profiles by calculating the conformity with the profile as the search condition data in the profile management method used for the information filtering presented by filtering of document information, to compare characteristics of respective profiles designated and correct the profiles through specialization to provide a difference in the result at the time of information filtering.

In further detail, validity explained above is calculated, in the profile management method used for information filtering, on the basis of the generation frequency of the text information matched with a profile of the information in the case where the information filtering is executed in the past within the predetermined period, user evaluation of the text information matched with a profile of the information in the case where the information filtering is executed in the past within the predetermined period, correction frequency of profile executed by the user in the past within the predetermined period and generation date of the relevant profile.

In still further detail, procedures for deleting profiles designated with the user are included in the profile management method used for information filtering explained above.

With the method explained above, it is now possible to detect existence of a plurality of similar profiles and existence of old profiles which are designated in the past and can no longer be used and then notify it to the user. Thereby, the user can easily and adequately re-arrange and delete the useless profiles with reference to such information. Accordingly, even when the user has specified a plurality profiles, the user can obtain distribution result without any omission and noise.

Moreover, it is now possible to prevent the holding of useless profiles through integration and specialization of profiles and thereby the user can effectively set the profiles. In addition, since it is not required to calculate conformity, the performance of the system as a whole can be improved. Moreover, since it is also possible to detect whether the preset profile is valid or invalid, if such profile is invalid, retry of setting of such profile is possible.

In the Drawings

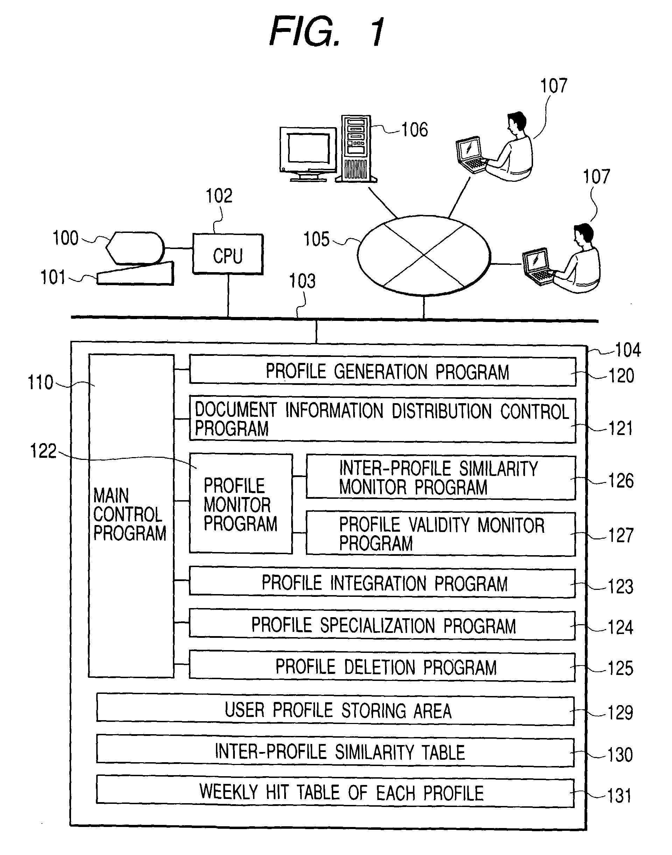

Fig. 1 is a system configuration diagram of the information filtering system of the present invention.
Fig. 2 is a problem analysis diagram (PAD) showing the processes of the filtering system using ordinary profiles.

Fig. 3 is a schematic diagram showing flows of practical processes of the filtering system using ordinary profiles.

Fig. 4 is a schematic diagram showing flows of practical processes when the user has a plurality of profiles in the filtering system using ordinary profiles.

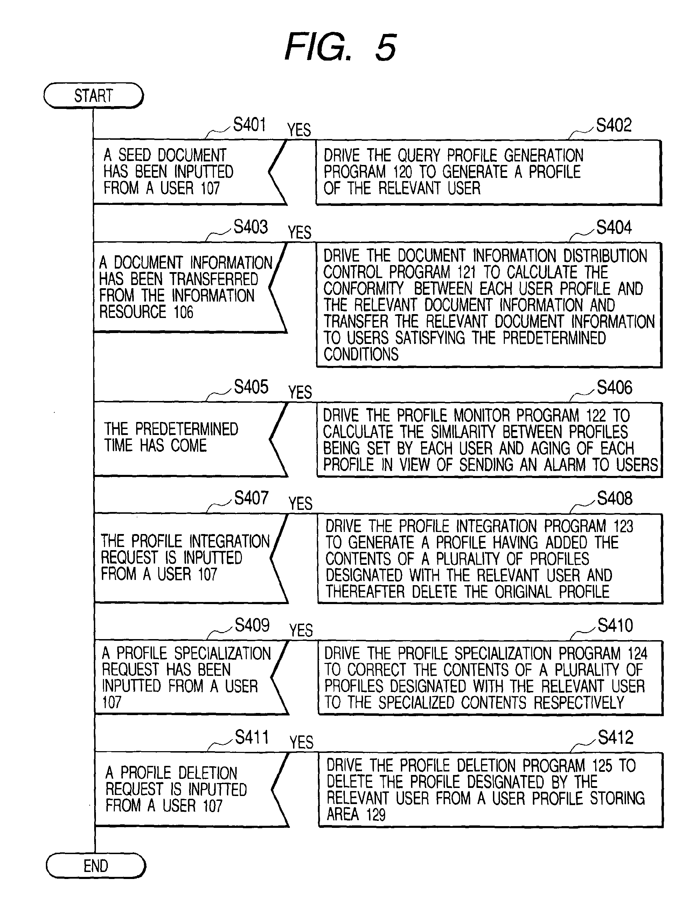

Fig. 5 is a PAD showing the process sequence of the main control program 110.

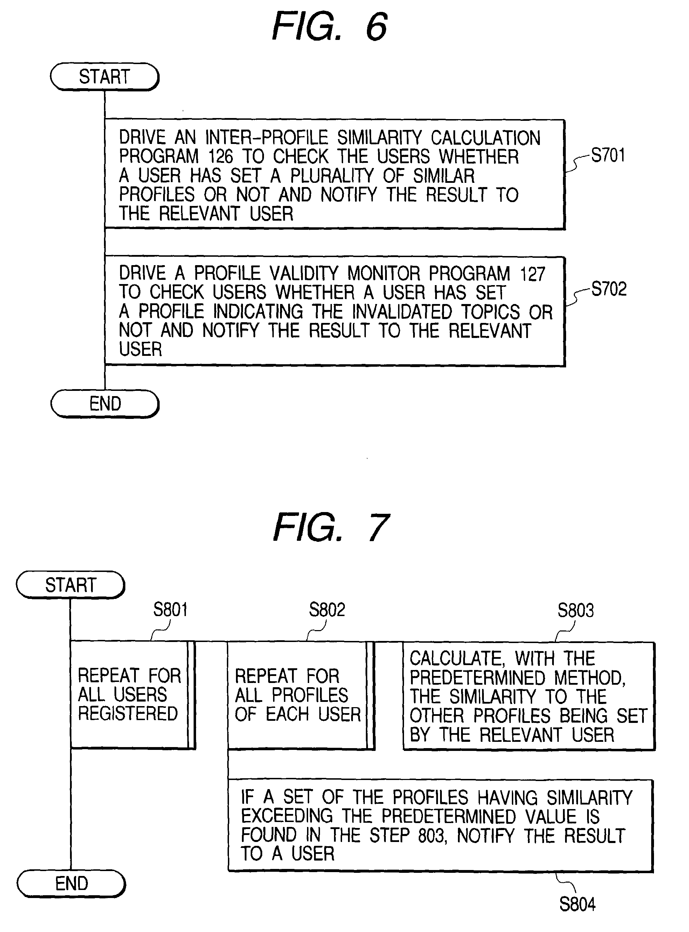

Fig. 6 is a PAD showing the process sequence of the profile monitor program 122.

Fig. 7 is a PAD showing the process sequence of the inter-profile similarity monitor program 126.

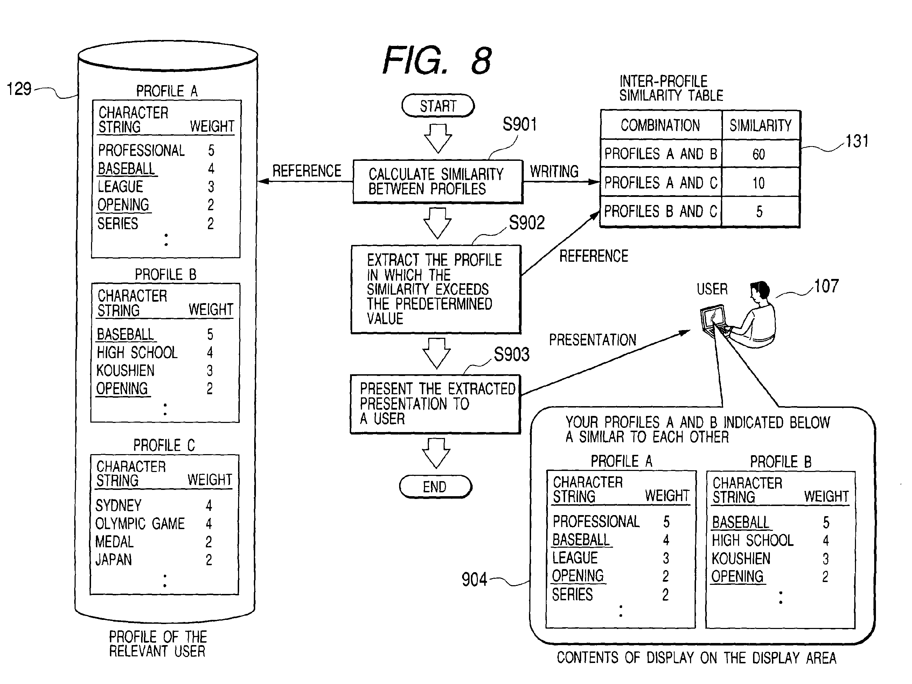

Fig. 8 is a schematic diagram showing flows of practical processes of the inter-profile similarity monitor program 126.

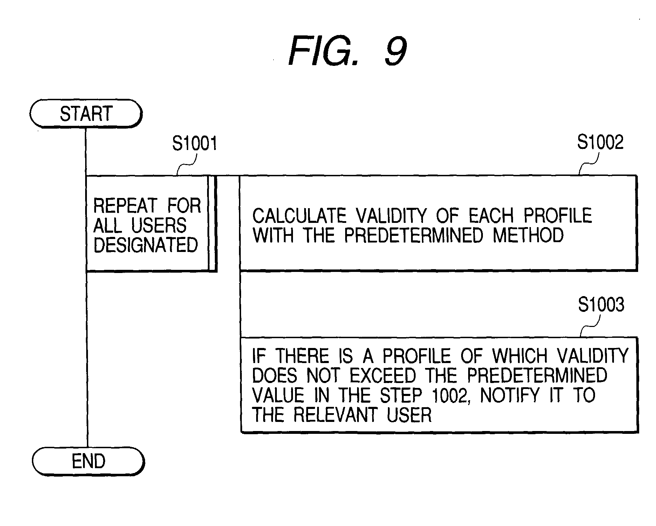

Fig. 9 is a PAD showing the process sequence of the profile validity monitor program 127.

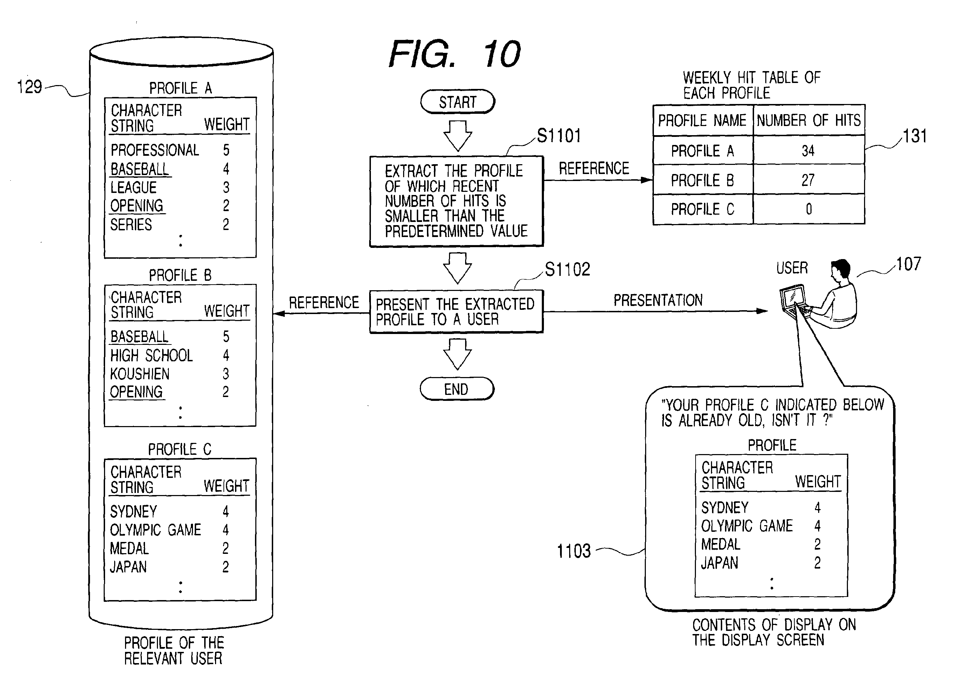

Fig. 10 is a schematic diagram showing flows of practical processes of the profile validity monitor program 127.

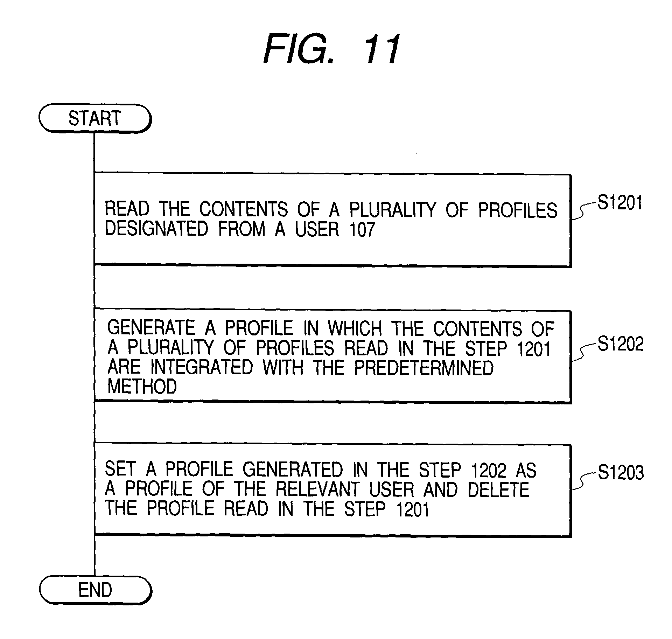

Fig. 11 is a PAD showing the process sequence of the profile integration program 123.

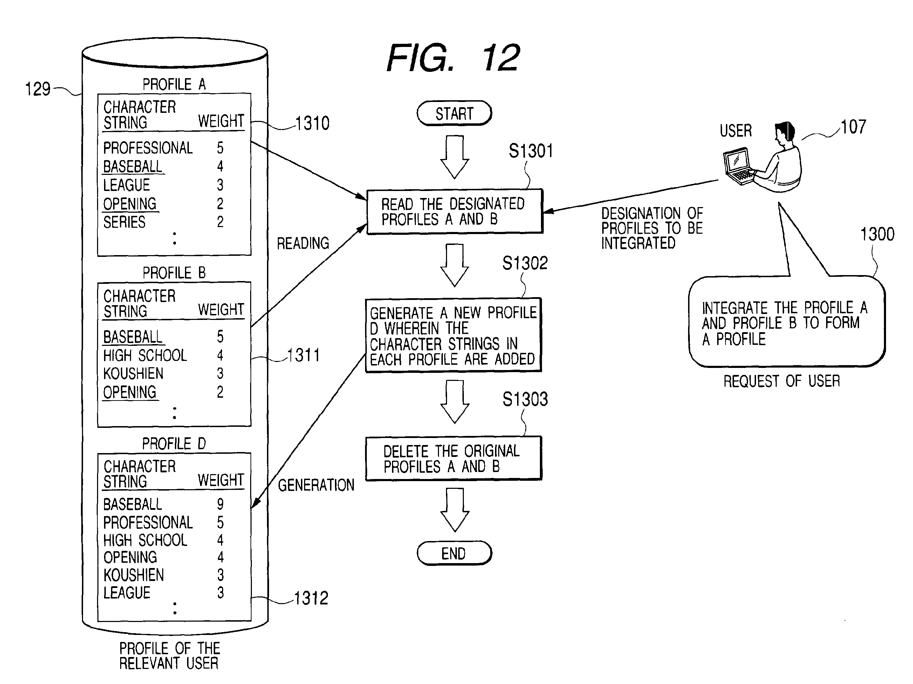

Fig. 12 is a schematic diagram showing the flows of practical processes of the profile integration program 123.

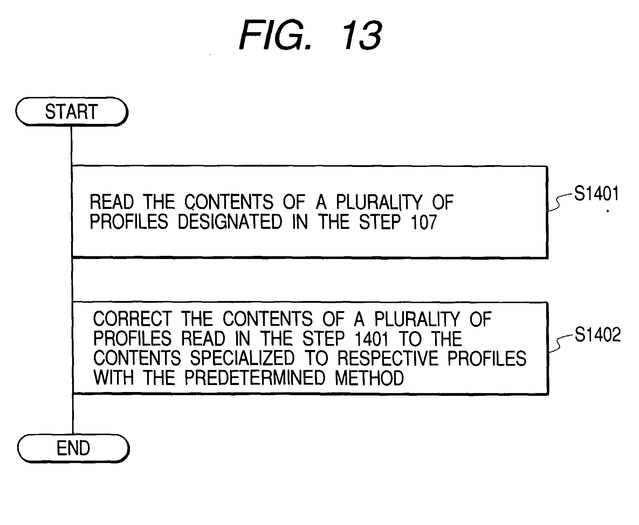

Fig. 13 is a PAD showing the process sequence of the profile specialization program 124.

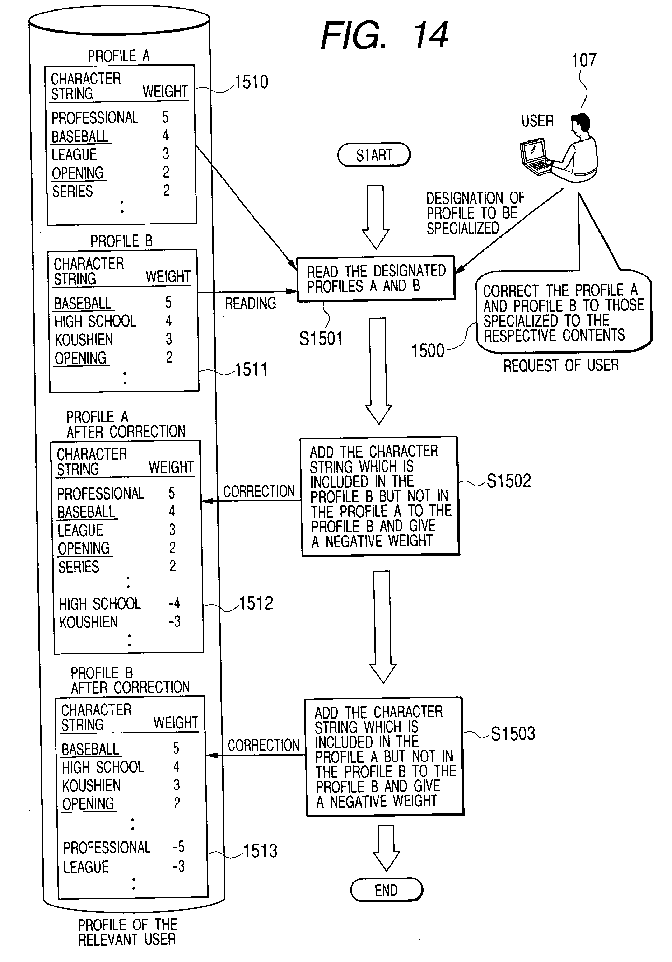

Fig. 14 is a schematic diagram showing the flows of practical processes of the profile specialization program 124.

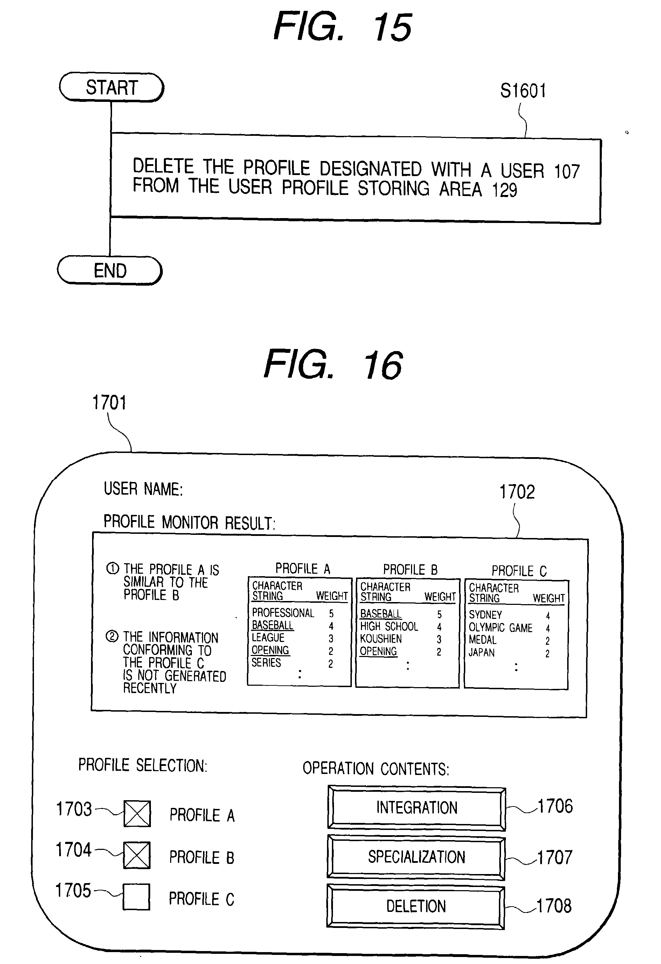

Fig. 15 is a PAD showing the process sequence of the profile deletion program 125.

Fig. 16 is a schematic diagram showing a profile management display image of the profile management method of the present invention.

A preferred embodiment of the present invention will be explained with reference to the accompanying drawings of Fig. 1 to Fig. 16.

[System Configuration of Information Filtering System]

First, a system configuration of the information filtering system of the present invention will be explained with reference to Fig. 1.

Fig. 1 is a system configuration diagram of the information filtering system of the present invention.

The information filtering system of the present invention comprises a display 100, a keyboard 101, a central processing unit (CPU) 102, a main memory 104 and a bus 103 connecting these elements.

Moreover, the bus 103 is also extended to a document information distribution source 106 for distributing document information via a communication line 105 such as LAN (Local Area Network to which a user 107 utilizing the information filtering system is connected) or the like. The document information distribution source 106 distributes electronic document information to this system using an electronic mail (E-mail) and presents document information via the Internet. The user 107 registers the search condition to this system using E-mail.

This system distributes the document information searched based on the search condition to the relevant user using an E-mail.

This preferred embodiment will be explained below under the assumption that the document information distribution source 106 distributes document information to this system using an E-mail or the like but it is also possible that the document information distribution source 106 is given only the function to present information on the Internet and therefore collection of texts is executed using an information collection robot. Moreover, it is also assumed that the user 107 registers the search condition to this system using an E-mail but it is also possible that the user registers such search condition to this system via the Web. Moreover, in this embodiment, it is also assumed that the text explained above searched based on the search condition is distributed to the relevant user from this system using an E-mail, but it is also possible to down-load such texts via the Internet or the like.

The main memory 104 stores, for execution, a main control program 110, a search profile generation program 120, a document information distribution control program 121, a profile monitor program 122, a profile integration program 123, a program specialization program 124, a profile deletion program 125, a user profile storing area 129, an inter-profile similarity table 130 and a weekly hit table of each profile 131.

Moreover, the profile monitor program 122 of these programs is formed of an inter-profile similarity monitor program 126 and a profile validity monitor program 127.

Functions and processes of respectively programs will be explained later in detail.

Above programs, although not illustrated, are generally stored in a hard disc apparatus and are loaded on the memory 104 for execution at the time of execution. Moreover, these programs can also be provided in the form stored in a storage medium such as a floppy disc and CD-ROM or the like.

[Process Sequence of Information Filtering System]

Next, the process sequence of the information filtering system of this embodiment will be explained sequentially.

(I) Process sequence of main control program

First, the process sequence of the main control program 110 will be explained with reference to Fig. 5.

Fig. 5 is a PAD (Problem Analysis Diagram) showing the process sequence of the main control program 110.

In the main control program, the processes of steps S405 to S412 for profile management are added to the processes of steps S401 to S404 for the information filtering.

The main control program 110 is driven when an instruction is received from a keyboard 101 of a system administrator of the information filtering system.

The main control program 110 drives, when it is determined that a seed document is inputted from the user 107 (S401), a search profile generation program 120 to generate a search profile of the relevant user (S402). The practical method for generating a search profile is same as that explained in the paragraph the related art.

Next, when it is determined that document information has been transferred from the information resource 106 (S403), the main control program 110 drives the document information distribution control program 121, calculates the conformity between the profile of each user and the relevant document information and then distributes the relevant document information to the user satisfying the predetermined condition (S404). A practical calculation method of conformity is also identical to that described in the paragraph of the related art.

Next, when it is determined that it is now the predetermined time (S405), the profile monitor program 122 is driven to calculate the inter-profile similarity and profile application period which are set with the user and an alarm is then notified to the user 107 (S406). The practical calculation method will be explained later.

Next, when it is determined that a profile integration request is inputted from the user 107 (S407), the profile integration program 123 is driven to generate a profile having integrated contents of a plurality of profile designated with the relevant user and then delete the original profile (S408). The practical profile integration sequence will be explained later.

Thereafter, when it is determined that a profile specialization request is inputted from the user 107 (S409), the profile specialization program 124 is driven to respectively correct the contents of a plurality of profiles designated with the relevant user to the specialized contents (S410). The practical profile specialization method will be explained later.

Subsequently, when it is determined that a profile deletion request is inputted from the user 107 (S411), a profile deletion program 125 is driven to delete the profile designated with the relevant user from the user profile storing area 129 (S412). The practical profile deletion method will be explained later.

(II) Process sequence of search profile generation program 120 and document information distribution program 121

For the process of the search profile generation program 120 in the process of step S402 to generate a profile and the process of the document information distribution control process program 121 in the process of step S404 to distribute document information among such main control processes, the process described in the paragraph of the related art may be introduced and the other process may also be utilized depending on Fig. 3.

Following explanation is based on the assumption that the process same as that explained in the paragraph of the Related Art is utilized depending on the practical example of Fig. 3.

As an example of the profile generation process in the step S402, the process ① of Fig. 3 is indicated as the typical process. Here, it is assumed that the user 201 inputs the seed document 202 "High school baseball championship has opened at the Koushien ball-park......". In this case, as the search profile generation method, it is assumed that the characteristic string is retrieved from the seed document 202, the number of times of appearing of such characteristic string is counted and such count value is written into the profile 203 as a weight of the characteristic string, as explained in the paragraph of the related art. The characteristic string may be retrieved with the method explained in the paragraph of the related art or with the morphological analysis using a word dictionary. Moreover, as a weight, the number of times of appearing of each character string in the seed document 202 is defined but it is also possible to define the other indices.

Moreover, as an example of the document information distribution control process in the step S404, the process ② of Fig. 3 is indicated as the typical process. The document information of various contents is distributed from the information resource 204. Thereafter, conformity between such document information and profile of each user stored in the user profile storing area is calculated. Here, as a method for calculating conformity between the profile and document information, it is recommended to use a method explained in the paragraph of related art. Namely, the conformity S (D) is calculated using the equation (1). Of course, it is also possible to calculate the conformity with the means other than the equation (1).

As indicated in the process ③ of Fig. 3, only the document information 207 including the character string such as "baseball" included in the profile 203 among various document information pieces 205 is distributed to the user 201 through calculation of the higher conformity with the equation (1) in the example of Fig. 3.

(III) Process sequence of profile monitor program 122

Next, the process sequence of the profile monitor program 122 will be explained with reference to Fig. 6.

Fig. 6 is a PAD showing the process sequence of the profile monitor program 122.

This program refers contents of profiles of the user and notifies similarity of contents to the user having a plurality of similar profiles in view of urging such user to optimize the profiles. Moreover, this program searches also whether the user has the profiles including old contents and not indicating the recent interest of the people or not and issues a warning to the users having such profiles.

The profile monitor program 122 drives the inter-profile similarity monitor program 126, searches whether each user has set or not a plurality of similar profiles and then issues a warning to the user having set such profiles (S701).

Next, the profile monitor program 122 drives the profile validity monitor program 127, searches whether each user has set or not the invalid profiles such as those indicating the old topics and then issues a warning to the user having set such profiles (S702).

Therefore, even when the user has set a plurality of profiles, the user can attain the distribution result without any noise and omission, because existence of a plurality of similar profiles and old profiles can be detected and this fact can also be notified to the user by calling, with the profile monitor program 122 as explained above, the inter-profile similarity monitor program 126 and profile validity monitor program 127.

(IV) Process sequence of inter-profile similarity monitor program 126 and practical example of such process

Next, the process sequence of the inter-profile similarity monitor program 126 will be explained with reference to Fig. 7 and Fig. 8.

Fig. 7 is a PAD showing the process sequence of the inter-profile similarity monitor program 126.

Fig. 8 is a schematic diagram showing the flows of practical processes of the inter-profile similarity monitor program 126.

This inter-profile similarity monitor program 126 is driven with the profile monitor program 122 to determine whether there are similar profiles or not among the profiles being set with the user. This program moreover calculates similarity indicating in what degree the profiles are similar and issues a warning to the user when there are similar profiles. Here, similarity is an index indicating in what degree profiles are similar among a plurality of profiles and can be thought as a validity of a plurality of profiles. Namely, when similarity is large, validity of a plurality of profiles can be evaluated as small and when similarity is small, validity of a plurality of profiles can be evaluated as large.

The inter-profile similarity monitor program 126 is executed repetitively for all users to which the processes of the steps S802 to S804 are registered (S701).

As the first process, the process of step S803 is repeated for all profiles being set with the user (S802). The process of step S803 calculates, for all profiles, the similarity with all of the other profiles being set with the relevant user with the predetermined method.

Here, as the method of calculating inter-profile similarity in the step S803, following equation (2), for example, may be used.

(Equation 2)

$$Sim(a,b) = \sum_{i}^{N} \left\{ Wa(i) \times Wb(i) \right\} \qquad \text{--- (Equation 2)}$$

In this equation, Sim(a, b) is similarity between the profile a and profile b, Wa(i) is weight of characteristic string i in the profile a, Wb(i) is weight of character string i in the profile b. Namely, this equation means that when there are identical characteristic strings, weights of both characteristic strings are multiplied and a sum is obtained for all characteristic strings in the profile a. Here, it is also possible to use the other equation as the calculation equation of similarity.

Next, when a set of the profiles in which the similarity calculated in the step S803 exceeds the predetermined value are found, this fact is notified to the user as a warning (S804).

Next, a practical example of the flows of processes of this inter-profile similarity monitor program 126 will be explained with reference to Fig. 8.

As shown in Fig. 8, it is assumed that a certain user 107 sets three profiles of the profile A, profile B and profile C to the user profile storing area 129. The profile similarity monitor program 126 calculates similarity among these three profiles with the (equation 2) and writes such similarity into an inter-profile similarity table 131 (S901). In the example shown in this figure, since the profile A and profile B include the common characteristic strings such as "baseball" and "opening", the higher similarity can be obtained from the (equation 2).

Subsequently, the profiles of which similarity exceeds the predetermined value are retrieved from the inter-profile similarity table 131 (S902). In the example shown in this figure, it is assumed that the profile A and profile B are retrieved because the similarity between these profiles exceeds the predetermined value (for example, a degree of similarity is 50).

Next, a set of the profile A and profile B retrieved in the step S902 is presented to the user 107 together with the information that "these profiles are similar"(S903). In the example of this figure, a comment "the profile A and profile B indicated below are similar" is displayed on the display screen 904 together with contents of respective profiles.

Thereby, the user 107 knows the fact that the user has set two profiles having the similar contents.

(V) Process sequence of profile validity monitor program and practical example of process

Next, the process sequence of the profile validity monitor program 127 will be explained with reference to Fig. 9 and Fig. 10.

Fig. 9 is a PAD showing the process sequence of the profile validity monitor program 127.

Fig. 10 is a schematic diagram showing flows of practical processes of the profile validity monitor program 127.

This profile validity monitor program 127 is driven in the step S702 with the profile monitor program 122 to determine whether there exists useless profiles for the user for which any information hitting to such profiles because these are already old is no longer generated or not among the profiles being set with each user and to notify the fact to the user as a warning when there exists such useless profiles.

The profile validity monitor program 127 repeats the processes of the steps S1002, S1003 for all users being registered (S1001).

In the step S1002, the validity of each profile being set with the relevant user is calculated with the predetermined method. Here, the validity means an index to indicate in what effectiveness the filtering of document information can be executed. For example, when the document information corresponding to a certain profile is often generated recently, the validity of this profile is set to a higher value under the condition that the topic of such profile is rather new. However, on the contrary, when the document information corresponding to such profile is not generated recently, the validity of this profile is set to a lower value by assuming that such profile has a higher possibility as an "old and useless" profile.

Next, when a profile having the validity which is calculated in the steps S1002 and does not exceed the predetermined value is found in the steps S1003, this fact is notified to the relevant user 107.

Next, a practical example of the flows of processes of the profile validity monitor program 127 will be explained with reference to Fig. 10.

As shown in Fig. 10, it is assumed that a certain user 107 has already set three profiles of the profile A, profile B and profile C which are stored in the user profile storing area 129. Moreover, a value of the number of hits of each profile counted whenever the document information matched with each profile is generated within the last one week is held in the weekly hit table 131 of each profile. The profile validity monitor program 127 refers first to the weekly hit table of each profile to retrieve the profiles of which number of hits is lower than the predetermined value (S1101).

Next, the profile retrieved in the step S1101 is presented to the user 107 as the profile having a higher validity (S1102). In the example of this figure, the number of hits of the profile C in the last one week is "0" and this value is lower than the predetermined value. Therefore, a warning "Your profile C indicated below is already old, isn't it?" is displayed on the display screen 1103 together with the contents of the profile C.

Therefore, the user 107 can detect existence of the profiles which are already old and cannot generate any related topics.

Here, in above explanation, the information of the last one week is stored in the weekly hit table 131 of each profile but it is also possible to store the information of the other period in place of one week depending on the type of application of the system.

Here, a means which is different from that explained above may also be used as a means for calculating the validity.

For example, a system is assumed in which the user 107 can input the evaluation result such as "This is just the document which I have wanted" or "This document is out of my interest" for the document obtained as a result of distribution (namely, the system provided with the "relevance feedback function") . In this case, it is also possible to introduce the method in which when the relevant document information is evaluated as "the document which I have wanted", the validity of the profile having the higher number of hits of the document information is set to a higher value and when the relevant document information is evaluated as "the document out of may interest", on the contrary, even if there are hits within the predetermined period in the past, the validity of such profile is set to a lower value.

Moreover, in the case of a system where the user can freely correct the contents of a profile, it is possible to introduce the method in which the validity is determined as low for the profile for which the user is assumed not to have corrected the contents thereof within the predetermined period. Moreover, it is also possible to introduce the method to determine that the validity is low for the profile for which longer time has passed from the first registration.

In addition, it is also possible to introduce the method to determine that the validity is low for the profile for which the value in the weekly hit table of each profile is reduced within the predetermined constant period.

(VI) Process sequence of profile integration program 123 and practical example of the process

Next, the process sequence of the profile integration program 123 will be sequentially explained with reference to Fig. 11 and Fig. 12.

Fig. 11 is a PAD showing the process sequence of the profile integration program 123.

Fig. 12 is a schematic diagram showing the flows of practical processes of the profile integration program 123.

This profile integration program 123 is driven in the step S408 with the main control program 110 when the user inputs the instruction to "integrate" the similar profile presented by the inter-profile similarity monitor program 126. This profile integration program 123 can be effectively used to eliminate useless profiles by integrating a plurality of similar profiles into one profile to prevent duplicated distribution to the user 107 of the document information which is matched with respective profiles.

The profile integration program 123 first reads contents of a plurality of profiles designated from the user 107 (S1201).

Next, a profile in which contents of a plurality of profiles read in the step S1201 are integrated with the predetermined method is generated (S1202). Here, an example of the profile integration process will be explained later.

Thereafter, a profile generated in the step S1202 is set as a profile of the relevant user and the profile read in the step S1201 is deleted (S1203).

Next, a practical example of the flows of processes of the profile integration program 123 will be explained with reference to Fig. 12.

As shown in Fig. 12, it is assumed that a certain user 107 is given a warning that the preset profile A and profile B are similar with the inter-profile similarity monitor program 126 and this user inputs a request for integration of these profiles to a profile by determining that it is useless to have such similar profiles.

The profile integration program 123 first reads contents of the profile A1310 and the profile B1311 designated by the user 107 (S1301).

Next, this program 123 generates a new profile D1312 in which the weights of the characteristic strings in each profile are added (S1302). In the example of Fig. 12, the weights of the respective characteristic strings being set in common to the profile A and profile B are added and the added weight is written into a new profile D with the weight of the characteristic strings included in only one profile left as it is.

For example, since the weight of the characteristic string "baseball" is "4" in the profile A but "5" in the profile B, these weights are added and therefore the weight of the profile D becomes "9". Moreover, since the weight of characteristic string "professional" which is set only in the profile A is "5", this weight is maintained as "5" in the profile D.

In this example, the integration means as explained above is used but the other means may also be used. For example, it is also possible in regard to the weights of the characteristic strings which are set in common in both profiles A and B that only larger weight is set in direct as the weight of the new profile D. Moreover, as the weight of each characteristic string after integration, an average value of the weights of the characteristic strings being set in the profile A and profile B may be set.

After the integration, the old profile A and profile B are deleted (S1303).

Accordingly, when the user 107 has determined that it is useless to keep a plurality of similar profiles, these profiles can easily be integrated to delete useless profiles by utilizing the profile integration program 123.

(VII) Process sequence of profile specialization program 124 and practical example of the process

Next, the process sequence of the profile specialization program 124 will be explained with reference to Fig. 13 and Fig. 14.

Fig. 13 is a PAD showing the process sequence of the profile specialization program 124.

Fig. 14 is a schematic diagram showing the flows of the practical processes of the profile specialization program 124. This profile specialization program 124 is driven when the user 107 inputs an instruction to "specialize" the similar profiles presented with the inter-profile similarity monitor program 126 to "the profiles specialized to respective contents" . This profile specialization program 124 can effectively be used to prevent duplicated distribution to the user 107 of document information pieces matched with respective profiles by specializing a plurality of similar profiles to respective contents and thereby to distribute, instead, the desired document information to the user 107 without any omission.

The profile specialization program 124 first reads contents of a plurality of profiles designated with the user 107 (S1401).

Next, contents of a plurality of profiles read in the step S1401 are corrected to the contents specialized in respective profiles with the predetermined method (S1402). An example of the process to correct respective profiles to the specialized profiles will be explained later.

Thereafter, a practical example of the flows of processes of this profile specialization program 124 will be explained with reference to Fig. 14.

As shown in Fig. 14, it is assumed that the user 107 is given a warning with the inter-profile similarity monitor program 126 that the preset profile A1510 and the profile B1511 are similar profiles. In this case, it is also assumed that the user 107 inputs a request to correct the similar profiles to those specialized to respective contents, upon determination that if these similar profiles are left as they are, a fear for duplicated distribution of the document information pieces matched with respective profiles is generated.

The profile specialization program 124 first reads contents of the designated profile A1510 and profile B1511 (S1501).

Next, contents of respective profiles are corrected to the specialized contents (S1502, S1503).

In the example of Fig. 14, a negative weight is given, in the step S1502, to the characteristic string which is included in the profile B1511 but in the profile A1510 and this weight is added to the profile A1510. For example, the characteristic strings "High school" and "Koushien" included in the profile B1511 are added to the profile A1510 by giving a negative weight thereto.

Meanwhile, a negative weight is given in the step S1503 to the characteristic string which is included in the profile A1510 but in the profile B1511 and this weight is added to the profile B1511. For example, the characteristic strings "professional" and "league" included in the profile A1510 are added to the profile B1511 by giving a negative weight.

When it is attempted to calculate conformity depending on the (equation 1) by correcting contents of respective profiles as explained above, it becomes difficult, for the document information assuring the higher conformity with the profile A1510, to calculate higher conformity with the profile B1511. Moreover, on the contrary, it becomes difficult, for the document information assuring the higher conformity with the profile B1511, to calculate higher conformity with the profile A1510. Namely, duplicated distribution of the document information conforming to the profile A1510 and the document information conforming to the profile B1511 is no longer generated easily and respective profiles can be specialized to respective topics.

Here, for the specialization of profiles, the methods other than that explained above may be used. For example, it is also possible to introduce the method in which the characteristic strings also included in the profile B1511 among the characteristic strings included in the profile A1510 are deleted from the profile A1510.

As explained above, the profile specialization program 124 is capable of preventing the distribution of duplicated document information pieces by respectively correcting contents of a plurality of similar profiles to the specialized contents and then using such profiles for the information filtering.

(VIII) Process sequence of profile deletion program 125

Next, the process sequence of the profile deletion program 125 will be explained with reference to Fig. 15.

Fig. 15 is a PAD showing the process sequence of the profile deletion program 125.

This profile deletion program 125 is driven when the user 107 inputs an instruction for "deletion" of the profiles which are presented and determined to be invalid with the profile validity monitor program 127. This program can be used effectively to prevent, when a topic becomes sufficiently old and document information in regard to such topic is no longer generated, that the old and useless profiles are still maintained by deleting the profiles in regard to such old topics .

The profile deletion program 125 deletes the profiles designated with the user 107 from the user profile storing area (S1601).

Therefore, the profiles designated with the user 107 can be deleted easily.

[Profile Management Display Image]

Next, a profile management display image in the profile management method of the present invention will be explained with reference to Fig. 16.

Fig. 16 is a schematic diagram showing the profile management image in the profile management method of the present invention.

A profile monitor result 1702 of the relevant user is displayed in the terminal display image 1701 of the user 107. As the profile monitor result 1702, the information "The profile A is similar to the profile B." due to the inter-profile similarity monitor program 126 and the information "Information conforming to the profile C is not generated recently." due to the profile validity monitor program 127 are displayed. Simultaneously, moreover, contents of these profiles are presented as the reference information.

The user 107 is therefore capable of determining how optimize the profiles by referring to these profile monitor results 1702 and then requesting such optimization to the system.

For example, it is assumed in the example of Fig. 16 that the user 107 has obtained the information indicating that the profile A and the profile B are similar and therefore thought to form a profile by integrating these profiles A and B. In this case, the user 107 depresses the "Integrate" button 1706 by checking the check box 1703 of the profile A and the check box 1704 of the profile B with a pointing device such as a mouse. Thereby, the profile integration program 123 is driven to set a profile having integrated the profile A and profile B and thereafter the old profiles A and B are deleted.

In the same manner, when the user 107 desires to correct contents of the profiles A and B to the specialized contents respectively, the user is requested to depress the "Specialize" button 1707. Thereby, the profile specialization program 124 is driven to correct contents of both profiles A and B.

Moreover, when the user 107 determines that the profile C is already unnecessary profile by checking the contents of profile C, the user 107 is requested to check only the check box 1705 of the profile C and then depresses the "Delete" button 1708. Thereby, the profile deletion program 125 is driven and the profile C is then deleted.

From this profile management display image, the user 107 is easily capable of detecting the conditions of the profiles being set. Moreover, the user 107 also can execute, with simplified manipulation, the re-arrangement of profiles such as optimization of profiles and deletion of useless profiles.

[Other Applicability of the Embodiments]

In the embodiment explained above, the information filtering system structured with a display 100, a keyboard 101, a central processing unit (CPU) 102, a main memory 104 and a bus 103 connecting these elements can be located at the area on any network provided at the at the intermediate area between the document information distribution source 106 and the communication line 105 and at the intermediate area between the communication line 105 and user 107 shown in Fig. 1.

Moreover, in the embodiment explained above, the inter-profile similarity monitor program 126, profile integration program 123 and profile specialization program 124 are provided for the processes of a plurality of profiles set by the user 107 but these programs can also be used for the processes of profiles preset by different users 107.

Moreover, the information filtering system explained in this embodiment includes all of the profile integration program 123, profile specialization program 124 and profile deletion program 125, but it is also possible to realize the information filtering system including any desired combination of these programs.

Furthermore, in the embodiment explained above, the inter-profile similarity monitor program 126, profile validity monitor program 127, profile integration program 123 and profile specialization program 124 are installed in the information filtering system but this information filtering system can also be utilized for the user to store a plurality of profiles in the document searching system in which the user can search the document database in the desired timing.

[Effect of the Invention in the Embodiments]

The present invention can provide a profile management method for obtaining the distribution result without any noise and omission in the information filtering by detecting existence of a plurality of similar profiles and old profiles, then notifying this fact to the user for urging the relevant user to take an adequate measure in such information filtering for filtering and presenting document information using profiles as the search condition data.

Moreover, the present invention can also provide a profile management method to prevent holding of useless profiles by adequately and easily optimizing and deleting old profiles and useless profiles, thereby to permit the user to effectively set the profiles and to maintain the performance of the system by eliminating reference to the useless profiles.

**Claims**

**1.** A profile management method to be used for information filtering to present document information through the filtering by calculating conformity with a profile as the search condition data, wherein the validity of a profile is notified to a user depending on the result of calculation for the validity by calculating the validity on the occasion of said information filtering for said profile.

2. A profile management method to be used for information filtering according to claim 1, wherein the validity for said information filtering indicates similarity among a plurality of profiles.

3. A profile management method to be used for information filtering according to claim 2, wherein two or more profiles among a plurality of said profiles designated with a user are integrated to one profile.

4. A profile management method to be used for information filtering for presenting, through the filtering, document information by calculating conformity with profiles as the search condition data, wherein a user is requested to designate two or more profiles, characteristics of the profiles designated are compared and such profiles are specialized for correction to generate difference among the results of said information filtering.

5. A profile management method to be used for information filtering according to claim 1, wherein said validity indicates ;
   generation frequency of the text information conforming to the profile when said information filtering has been conducted within the predetermined time;
   user evaluation of the text information conforming to the profile when said information filtering has been conducted within the predetermined time;
   frequency of correction of profile by a user within the predetermined time in the past; and
   generation date of such profile.

6. A profile management method to be used for information filtering according to any one of claims 1, 2 and 5, wherein a sequence for deleting the profiles designated with a user is included.

7. A profile management method to be used for information filtering for presenting document information through the filtering by calculating conformity with the profile as the search condition data with execution of a computer, wherein the validity for said information filtering is calculated for said profile and the validity of said profile is notified to a user depending on the result of calculation of the validity.

8. A profile management method to be used for information filtering according to claim 7, wherein the validity for said information filtering indicates similarity among a plurality of profiles.

9. A profile management program to be used for information filtering according to claim 8, wherein two or more profiles designated with a user among a plurality of said profiles are integrated into one profile.

10. A profile management program to be used for information filtering according to claim 9, wherein a user is requested to designate profiles and a window to give an instruction for integration of said profiles is displayed.

11. A profile management program to be used for information filtering for presenting document information through the filtering by calculating conformity with a profile as the search condition data owing to execution of a computer, wherein a user is requested to designate two or more profiles, characteristics of the profiles designated are compared and such profiles are specialized for correction to generate difference among the results of said information filtering.

12. A profile management program to be used for information filtering according to claim 11, wherein a user is requested to designate profiles and a window for giving instruction for specialized correction of said profiles is displayed.

13. A profile management program to be used for information filtering according to claim 7, wherein said validity indicates generation frequency of the text information conforming to the profile when said information filtering has been conducted within the predetermined time;
   user evaluation of the text information conforming to the profile when said information filtering has been conducted within the predetermined time;
   frequency of correction of profile by a user within the predetermined time in the past; and
   generation date of such profile.

14. A profile management program to be used for information filtering according to any one of claims 7, 8 and 13, wherein a sequence for deleting the profiles designated with a user is included.

15. A profile management program to be used for information filtering according to claim 14, wherein a user is requested to designate profiles and a window to give an instruction for deletion of said profiles is displayed.

# FIG. 1

# FIG. 2

START

S501 — A SEED DOCUMENT HAS BEEN INPUTTED FROM A USER

YES → S502 — A PROFILE OF RELEVANT USER IS GENERATED

S503 — A DOCUMENT INFORMATION HAS BEEN TRANSFERRED FROM AN INFORMATION RESOURCE

YES → S504 — CONFORMITY BETWEEN A PROFILE OF EACH USER AND THE RELEVANT DOCUMENT INFORMATION IS CALCULATED AND THE RELEVANT DOCUMENT INFORMATION IS DISTRIBUTED TO USERS SATISFYING THE PREDETERMINED CONDITIONS

END

# FIG. 3

③ DATA HAVING HIGHER CONFORMITY IS DISTRIBUTED TO USERS

204

INFORMATION DOCUMENT GENERATED

INFORMATION RESOURCE

205

206

FILTERING SYSTEM

THE CENTRAL LEAGUE OF PROFESSIONAL BASEBALL...

HIGH SCHOOL BASEBALL CHAMPIONSHIP, AT KOUSHIEN BALL PARK...

JAPAN SERIES OF THE PROFESSIONAL BASEBALL HAS BEEN OPENED...

207

201

USER

A SEED DOCUMENT IS REGISTERED

② CONFORMITY BETWEEN EACH DOCUMENT INFORMATION AND A PROFILE IS CALCULATED

REFERENCE

PROFILE OF THE RELEVANT USER

203

PROFILE

| CHARACTER STRING | WEIGHT |
|---|---|
| BASEBALL | 5 |
| HIGH SCHOOL | 4 |
| KOUSHIEN | 3 |
| OPENING | 2 |
| : | |

① CHARACTERISTICS TERMES ARE EXTRACTED FROM A SEED DOCUMENT TO GENERATE A PROFILE

HIGH SCHOOL BASEBALL CHAMPIONSHIP HAS BEEN OPENED AT THE KOUSHIEN BALL PARK...

202

EP 1 271 357 A2

# FIG. 4

**301** INFORMATION RESOURCE

DOCUMENT INFORMATION GENERATED

**302**

**303** FILTERING SYSTEM

CONFORMING TO THE PROFILE A

| THE CENTRAL LEAGUE OF PROFESSIONAL BASEBALL... | **306** |

| HIGH SCHOOL BASEBALL CHAMPIONSHIP, AT KOUSHIEN BALL PARK... |

| JAPAN SERIES OF PROFESSIONAL BASEBALL HAS BEEN OPENED... |

CONFORMING TO THE PROFILE B

| THE CENTRAL LEAGUE OF PROFESSIONAL BASEBALL... |

| HIGH SCHOOL BASEBALL CHAMPIONSHIP, AT KOUSHIEN BALL PARK... |

| JAPAN SERIES OF PROFESSIONAL BASEBALL HAS BEEN OPENED... | **307** |

**308** USER

REFERENCE | CONFORMITY BETWEEN EACH DOCUMENT INFORMATION AND EACH PROFILE IS CALCULATED

PROFILE OF THE RELEVANT USER

**304**

**305**

**309**

| PROFILE A | | PROFILE B | | PROFILE C | |
|---|---|---|---|---|---|
| CHARACTER STRING | WEIGHT | CHARACTER STRING | WEIGHT | CHARACTER STRING | WEIGHT |
| PROFESSIONAL | 5 | BASEBALL | 5 | SYDNEY | 4 |
| BASEBALL | 4 | HIGH SCHOOL | 4 | OLYMPIC GAME | 4 |
| LEAGUE | 3 | KOUSHIEN | 3 | MEDAL | 2 |
| OPENING | 2 | OPENING | 2 | JAPAN | 2 |
| SERIES | 2 | : | | : | |

EP 1 271 357 A2

# FIG. 5

START

S401 YES
A SEED DOCUMENT HAS BEEN INPUTTED FROM A USER 107

S402
DRIVE THE QUERY PROFILE GENERATION PROGRAM 120 TO GENERATE A PROFILE OF THE RELEVANT USER

S403 YES
A DOCUMENT INFORMATION HAS BEEN TRANSFERRED FROM THE INFORMATION RESOURCE 106

S404
DRIVE THE DOCUMENT INFORMATION DISTRIBUTION CONTROL PROGRAM 121 TO CALCULATE THE CONFORMITY BETWEEN EACH USER PROFILE AND THE RELEVANT DOCUMENT INFORMATION AND TRANSFER THE RELEVANT DOCUMENT INFORMATION TO USERS SATISFYING THE PREDETERMINED CONDITIONS

S405 YES
THE PREDETERMINED TIME HAS COME

S406
DRIVE THE PROFILE MONITOR PROGRAM 122 TO CALCULATE THE SIMILARITY BETWEEN PROFILES BEING SET BY EACH USER AND AGING OF EACH PROFILE IN VIEW OF SENDING AN ALARM TO USERS

S407 YES
THE PROFILE INTEGRATION REQUEST IS INPUTTED FROM A USER 107

S408
DRIVE THE PROFILE INTEGRATION PROGRAM 123 TO GENERATE A PROFILE HAVING ADDED THE CONTENTS OF A PLURALITY OF PROFILES DESIGNATED WITH THE RELEVANT USER AND THEREAFTER DELETE THE ORIGINAL PROFILE

S409 YES
A PROFILE SPECIALIZATION REQUEST HAS BEEN INPUTTED FROM A USER 107

S410
DRIVE THE PROFILE SPECIALIZATION PROGRAM 124 TO CORRECT THE CONTENTS OF A PLURALITY OF PROFILES DESIGNATED WITH THE RELEVANT USER TO THE SPECIALIZED CONTENTS RESPECTIVELY

S411 YES
A PROFILE DELETION REQUEST IS INPUTTED FROM A USER 107

S412
DRIVE THE PROFILE DELETION PROGRAM 125 TO DELETE THE PROFILE DESIGNATED BY THE RELEVANT USER FROM A USER PROFILE STORING AREA 129

END

# FIG. 6

START

DRIVE AN INTER-PROFILE SIMILARITY CALCULATION PROGRAM 126 TO CHECK THE USERS WHETHER A USER HAS SET A PLURALITY OF SIMILAR PROFILES OR NOT AND NOTIFY THE RESULT TO THE RELEVANT USER ⌐S701

DRIVE A PROFILE VALIDITY MONITOR PROGRAM 127 TO CHECK USERS WHETHER A USER HAS SET A PROFILE INDICATING THE INVALIDATED TOPICS OR NOT AND NOTIFY THE RESULT TO THE RELEVANT USER ⌐S702

END

# FIG. 7

START

S801

REPEAT FOR ALL USERS REGISTERED

S802

REPEAT FOR ALL PROFILES OF EACH USER

S803

CALCULATE, WITH THE PREDETERMINED METHOD, THE SIMILARITY TO THE OTHER PROFILES BEING SET BY THE RELEVANT USER

IF A SET OF THE PROFILES HAVING SIMILARITY EXCEEDING THE PREDETERMINED VALUE IS FOUND IN THE STEP 803, NOTIFY THE RESULT TO A USER

S804

END

# FIG. 8

**PROFILE OF THE RELEVANT USER** (129)

### PROFILE A

| CHARACTER STRING | WEIGHT |
|---|---|
| PROFESSIONAL | 5 |
| BASEBALL | 4 |
| LEAGUE | 3 |
| OPENING | 2 |
| SERIES | 2 |
| ⋮ | |

### PROFILE B

| CHARACTER STRING | WEIGHT |
|---|---|
| BASEBALL | 5 |
| HIGH SCHOOL | 4 |
| KOUSHIEN | 3 |
| OPENING | 2 |
| ⋮ | |

### PROFILE C

| CHARACTER STRING | WEIGHT |
|---|---|
| SYDNEY | 4 |
| OLYMPIC GAME | 4 |
| MEDAL | 2 |
| JAPAN | 2 |
| ⋮ | |

**START**

**S901** — REFERENCE ← CALCULATE SIMILARITY BETWEEN PROFILES → WRITING

**S902** — EXTRACT THE PROFILE IN WHICH THE SIMILARITY EXCEEDS THE PREDETERMINED VALUE — REFERENCE

**S903** — PRESENT THE EXTRACTED PRESENTATION TO A USER — PRESENTATION

**END**

### INTER-PROFILE SIMILARITY TABLE (131)

| COMBINATION | SIMILARITY |
|---|---|
| PROFILES A AND B | 60 |
| PROFILES A AND C | 10 |
| PROFILES B AND C | 5 |

USER (107)

### CONTENTS OF DISPLAY ON THE DISPLAY AREA (904)

YOUR PROFILES A AND B INDICATED BELOW A SIMILAR TO EACH OTHER

PROFILE A

| CHARACTER STRING | WEIGHT |
|---|---|
| PROFESSIONAL | 5 |
| BASEBALL | 4 |
| LEAGUE | 3 |
| OPENING | 2 |
| SERIES | 2 |
| ⋮ | |

PROFILE B

| CHARACTER STRING | WEIGHT |
|---|---|
| BASEBALL | 5 |
| HIGH SCHOOL | 4 |
| KOUSHIEN | 3 |
| OPENING | 2 |
| ⋮ | |

EP 1 271 357 A2

# FIG. 9

```
  ┌──────────┐
  (  START   )
  └─────┬────┘
        │           S1001                                              S1002
        │            ┌─┐                                                ┌─┐
  ┌─────┴──────┐     │ │  ┌──────────────────────────────────────────────────────┐
  │ REPEAT FOR │     │ │  │ CALCULATE VALIDITY OF EACH PROFILE                    │
  │ ALL USERS  │─────┤ │  │ WITH THE PREDETERMINED METHOD                         │
  │ DESIGNATED │     │ │  │                                                      │
  └─────┬──────┘     │ │  └──────────────────────────────────────────────────────┘
        │                                                               S1003
        │                                                                ┌─┐
        │                     ┌──────────────────────────────────────────────────────┐
        │                     │ IF THERE IS A PROFILE OF WHICH VALIDITY              │
        │                     │ DOES NOT EXCEED THE PREDETERMINED                    │
        │                     │ VALUE IN THE STEP 1002, NOTIFY IT TO                 │
        │                     │ THE RELEVANT USER                                   │
        │                     └──────────────────────────────────────────────────────┘
  ┌─────┴────┐
  (   END    )
  └──────────┘
```

# FIG. 10

129 — PROFILE OF THE RELEVANT USER

### PROFILE A

| CHARACTER STRING | WEIGHT |
|---|---|
| PROFESSIONAL | 5 |
| BASEBALL | 4 |
| LEAGUE | 3 |
| OPENING | 2 |
| SERIES | 2 |
| ⋮ | |

### PROFILE B

| CHARACTER STRING | WEIGHT |
|---|---|
| BASEBALL | 5 |
| HIGH SCHOOL | 4 |
| KOUSHIEN | 3 |
| OPENING | 2 |
| ⋮ | |

### PROFILE C

| CHARACTER STRING | WEIGHT |
|---|---|
| SYDNEY | 4 |
| OLYMPIC GAME | 4 |
| MEDAL | 2 |
| JAPAN | 2 |
| ⋮ | |

PROFILE OF THE RELEVANT USER

START

S1101 — EXTRACT THE PROFILE OF WHICH RECENT NUMBER OF HITS IS SMALLER THAN THE PREDETERMINED VALUE

REFERENCE →

WEEKLY HIT TABLE OF EACH PROFILE

| PROFILE NAME | NUMBER OF HITS |
|---|---|
| PROFILE A | 34 |
| PROFILE B | 27 |
| PROFILE C | 0 |

131

REFERENCE ← S1102 — PRESENT THE EXTRACTED PROFILE TO A USER → PRESENTATION → USER 107

END

"YOUR PROFILE C INDICATED BELOW IS ALREADY OLD, ISN'T IT ?"

### PROFILE

| CHARACTER STRING | WEIGHT |
|---|---|
| SYDNEY | 4 |
| OLYMPIC GAME | 4 |
| MEDAL | 2 |
| JAPAN | 2 |
| ⋮ | |

1103

CONTENTS OF DISPLAY ON THE DISPLAY SCREEN

EP 1 271 357 A2

# FIG. 11

START

READ THE CONTENTS OF A PLURALITY OF PROFILES DESIGNATED FROM A USER 107 — S1201

GENERATE A PROFILE IN WHICH THE CONTENTS OF A PLURALITY OF PROFILES READ IN THE STEP 1201 ARE INTEGRATED WITH THE PREDETERMINED METHOD — S1202

SET A PROFILE GENERATED IN THE STEP 1202 AS A PROFILE OF THE RELEVANT USER AND DELETE THE PROFILE READ IN THE STEP 1201 — S1203

END

FIG. 12

PROFILE OF THE RELEVANT USER

129

PROFILE A

| CHARACTER STRING | WEIGHT |
|---|---|
| PROFESSIONAL | 5 |
| BASEBALL | 4 |
| LEAGUE | 3 |
| OPENING | 2 |
| SERIES | 2 |

1310

PROFILE B

| CHARACTER STRING | WEIGHT |
|---|---|
| BASEBALL | 5 |
| HIGH SCHOOL | 4 |
| KOUSHIEN | 3 |
| OPENING | 2 |

1311

PROFILE D

| CHARACTER STRING | WEIGHT |
|---|---|
| BASEBALL | 9 |
| PROFESSIONAL | 5 |
| HIGH SCHOOL | 4 |
| OPENING | 4 |
| KOUSHIEN | 3 |
| LEAGUE | 3 |

1312

READING

GENERATION

START

S1301 READ THE DESIGNATED PROFILES A AND B

S1302 GENERATE A NEW PROFILE D WHEREIN THE CHARACTER STRINGS IN EACH PROFILE ARE ADDED

S1303 DELETE THE ORIGINAL PROFILES A AND B

END

USER 107

DESIGNATION OF PROFILES TO BE INTEGRATED

1300 INTEGRATE THE PROFILE A AND PROFILE B TO FORM A PROFILE

REQUEST OF USER

EP 1 271 357 A2

# FIG. 13

START

READ THE CONTENTS OF A PLURALITY OF PROFILES DESIGNATED IN THE STEP 107 — S1401

CORRECT THE CONTENTS OF A PLURALITY OF PROFILES READ IN THE STEP 1401 TO THE CONTENTS SPECIALIZED TO RESPECTIVE PROFILES WITH THE PREDETERMINED METHOD — S1402

END

# FIG. 14

107

USER

**PROFILE A**

| CHARACTER STRING | WEIGHT |
|---|---|
| PROFESSIONAL | 5 |
| BASEBALL | 4 |
| LEAGUE | 3 |
| OPENING | 2 |
| SERIES | 2 |
| : | |

1510

**PROFILE B**

| CHARACTER STRING | WEIGHT |
|---|---|
| BASEBALL | 5 |
| HIGH SCHOOL | 4 |
| KOUSHIEN | 3 |
| OPENING | 2 |
| : | |

1511

**PROFILE A AFTER CORRECTION**

| CHARACTER STRING | WEIGHT |
|---|---|
| PROFESSIONAL | 5 |
| BASEBALL | 4 |
| LEAGUE | 3 |
| OPENING | 2 |
| SERIES | 2 |
| : | |
| HIGH SCHOOL | -4 |
| KOUSHIEN | -3 |
| : | |

1512

**PROFILE B AFTER CORRECTION**

| CHARACTER STRING | WEIGHT |
|---|---|
| BASEBALL | 5 |
| HIGH SCHOOL | 4 |
| KOUSHIEN | 3 |
| OPENING | 2 |
| : | |
| PROFESSIONAL | -5 |
| LEAGUE | -3 |
| : | |

1513

PROFILE OF THE RELEVANT USER

START

DESIGNATION OF PROFILE TO BE SPECIALIZED

READING

READ THE DESIGNATED PROFILES A AND B — S1501

CORRECT THE PROFILE A AND PROFILE B TO THOSE SPECIALIZED TO THE RESPECTIVE CONTENTS

1500

REQUEST OF USER

CORRECTION

ADD THE CHARACTER STRING WHICH IS INCLUDED IN THE PROFILE B BUT NOT IN THE PROFILE A TO THE PROFILE B AND GIVE A NEGATIVE WEIGHT — S1502

CORRECTION

ADD THE CHARACTER STRING WHICH IS INCLUDED IN THE PROFILE A BUT NOT IN THE PROFILE B TO THE PROFILE B AND GIVE A NEGATIVE WEIGHT — S1503

END

# FIG. 15

START

S1601

DELETE THE PROFILE DESIGNATED WITH A USER 107
FROM THE USER PROFILE STORING AREA 129

END

# FIG. 16

1701

USER NAME:

PROFILE MONITOR RESULT:                                    1702

① THE PROFILE A IS SIMILAR TO THE PROFILE B

② THE INFORMATION CONFORMING TO THE PROFILE C IS NOT GENERATED RECENTLY

| PROFILE A | |
|---|---|
| CHARACTER STRING | WEIGHT |
| PROFESSIONAL | 5 |
| BASEBALL | 4 |
| LEAGUE | 3 |
| OPENING | 2 |
| SERIES | 2 |
| : | |

| PROFILE B | |
|---|---|
| CHARACTER STRING | WEIGHT |
| BASEBALL | 5 |
| HIGH SCHOOL | 4 |
| KOUSHIEN | 3 |
| OPENING | 2 |
| : | |

| PROFILE C | |
|---|---|
| CHARACTER STRING | WEIGHT |
| SYDNEY | 4 |
| OLYMPIC GAME | 4 |
| MEDAL | 2 |
| JAPAN | 2 |
| : | |

PROFILE SELECTION:

1703 ☒ PROFILE A

1704 ☒ PROFILE B

1705 ☐ PROFILE C

OPERATION CONTENTS:

INTEGRATION        1706

SPECIALIZATION     1707

DELETION           1708